(19) Europäisches Patentamt

European Patent Office

Office européen des brevets

(11) **EP 0 979 021 A2**

(12) **EUROPÄISCHE PATENTANMELDUNG**

(43) Veröffentlichungstag:
09.02.2000 Patentblatt 2000/06

(51) Int. Cl.7: **H04Q 11/04**

(21) Anmeldenummer: **99115275.2**

(22) Anmeldetag: **02.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **05.08.1998 DE 19835394**

(71) Anmelder:
**SIEMENS AKTIENGESELLSCHAFT**
**80333 München (DE)**

(72) Erfinder: **Wewers, Otger**
**46395 Bocholt (DE)**

(54) **Verfahren und Vorrichtung zur Kommunikation zwischen mehreren, an einem externen ISDN-S0-Bus angeschlossenen Endgeräten**

(57) Mit der Erfindung wird ein interner Kommunikationskanal zwischen den angeschlossenen Teilnehmern unter Rückgriff auf den durch Impedanzanpassung kurzschlußfrei gehaltenen Phantomkreis gebildet. Entfernungsabhängige Laufzeitunterschiede der von den einzelnen Teilnehmern über den Bus gesendeten Signale zur zentralen Einspeisestelle werden durch Zugriff auf den Phantomkreis bestimmt und mittels teilnehmerseitig jeweils vorhandenem Controller sendezeitpunktseitig nachgeregelt.

Fig. 2

EP 0 979 021 A2

## Beschreibung

Die Erfindung betrifft ein Verfahren und eine Vorrichtung zur Kommunikation zwischen mehreren, an einem externen ISDN-S0-Bus lokal angeschlossenen Teilnehmern mit einem durch ein Senderleitungspaar und Empfangsleitungspaar des ISDN-S0-Bus gebildeten Phantomkreis gemäß Oberbegriff der Patentansprüche 1, 7 oder 8.

Es ist bekannt, an einen externen ISDN-S0-Bus mehrere, d.h. bis zu 8 Teilnehmer anzuschließen, welche auf den Bus zugreifen. Der Bus stellt zwei B-Kanäle (Netzkanäle) und einen D-Kanal (Steuerkanal) zur Verfügung und ist vieradrig ausgeführt.

Eine Kommunikation zwischen den angeschlossenen Teilnehmern, z.B. DECT-Basisstationen eines lokalen Netzes in Form eines externen Bussystems ist jedoch nur über das öffentliche Netz möglich, wobei hier in nachteiliger Weise Gesprächskosten anfallen und die B-Kanäle im ISDN-Netz blockiert werden.

Weiterhin ist die Entfernung, die mit einem S0-Bus im Punktzu-Mehrpunkt-Betrieb überbrückt werden kann, also die Entfernung zwischen den einzelnen Teilnehmern und der zentralen Einspeise- und Netzanschlußstelle (NTBA), die den S0-Bus mit dem ISDN-Netz verbindet, begrenzt. Die Entfernungen betragen bei einem passiven Bus ca. 200 m und bei einem erweiterten passiven Bus ca. 50 m zwischen den einzelnen Teilnehmern und im wesentlichen 500 m zwischen dem NTBA und dem Teilnehmer oder der Teilnehmergruppe.

Ursache für die begrenzte Buslänge ist der entfernungsabhängige Laufzeitunterschied der von den einzelnen Teilnehmern gesendeten Bits und deren Eintreffen an der NTBA. Dies deshalb, da die Teilnehmer selbst als gemeinsamen Bezug nur den Senderahmen ausgehend von der NTBA besitzen. Kabeldämpfung als begrenzender Faktor tritt erst bei Entfernungen von 1000 m im Punkt-zu-Punkt-Betrieb auf.

Bei einem Mehrgeräteanschluß an einem S0-Bus wird nach Abbau der letzten Verbindung die Synchronität der angeschlossenen DECT (Digital-European-Cordless-Telecommunication)-Basisstationen, die durch eine Synchronisierung auf den S0-Rahmen erreicht wurde, aufgegeben. Eine nahtlose Weitergabe des Gespräches dann, wenn das Mobilteil zwischen den Funkbereichen der Basisteile wechselt, ist somit grundsätzlich nicht mehr möglich. Darüber hinaus bieten gegebene S0-Rahmenstrukturen keine Möglichkeit zu einer DECT-Multiframe-Synchronisierung beispielsweise im 160 ms-Rahmen, die für ein übergangsfreies Hand-off erforderlich ist.

Aus dem Vorgenannten ist es Aufgabe der Erfindung, ein Verfahren und eine Vorrichtung zur Kommunikation zwischen mehreren, an einem externen ISDN-S0-Bus lokal angeschlossenen Teilnehmern mit einem durch ein Senderleitungspaar und ein Empfangsleitungspaar des ISDN-Bus gebildeten Phantomkreis anzugeben, wobei ein zellulares Kleinsystem gebildet werden kann, das einen gemeinsamen internen Sprechweg aufweist und wobei eine Gesprächsübergabe sowohl intern als auch extern unterbrechungsfrei ermöglicht wird.

Die Lösung der Aufgabe der Erfindung erfolgt mit einem Verfahren in seiner Definition gemäß Patentanspruch 1 sowie mit einer Vorrichtung nach den Merkmalen der Ansprüche 7 oder 8. Die Unteransprüche umfassen mindestens zweckmäßige Ausgestaltungen und Weiterbildungen des Grundgedankens der Erfindung.

Dieser Grundgedanke der Erfindung besteht nun darin, ausgehend von einem externen ISDN-S0-Bus einen internen Kommunikationskanal zwischen angeschlossenen Teilnehmern unter Rückgriff auf einen durch Impedanzanpassung kurzschlußfrei gehaltenen Phantomkreis zu bilden.

Entfernungsabhängige Laufzeitunterschiede, die bei größeren Leitungslängen des Busses auftauchen und die sich in den von den einzelnen Teilnehmern über den Bus gesendeten Signale zur zentralen Einspeise- und Netzanschlußstelle (NTBA) niederschlagen, werden durch Zugriff auf den Phantomkreis bestimmt und mittels teilnehmerseitig jeweils vorhandenem Controller nachgeregelt. Mit anderen Worten wird eine Neufestlegung der Sendezeitpunkte vorgenommen, so daß eine Synchronität der auf den Bus zu übertragenden Informationen insgesamt gegeben ist. Mit der vorstehend beschriebenen Maßnahme wird bezogen auf den Eingang der zentralen Einspeise-, Netzanschluß- oder Koppelstelle (NTBA) ein Rahmenversatz vermieden und es ist gewährleistet, daß die übertragenen Signale im Synchronraster liegen.

In einer Ausgestaltung der Erfindung können die im Phantomkreis übertragenen Kommunikationssignale oder -bits auf der Basis der bestimmten Laufzeitunterschiede zugeordnet werden. Die Daten- und Signalübertragung über den Phantomkreis erfolgt auf der Basis eines an sich bekannten Zeitgetrenntlageverfahrens. Hierbei wird die Zugriffskoordinierung auf den Phantomkreis durch einen Master vorgenommen, wobei die Synchronisation der angeschlossenen Slave-Teilnehmer oder Slave-Basen, z.B. einer DECT-Basisstation, des Taktes und der Rahmen durch vorgegebene Bits des Masters erfolgt, welcher seinen Takt vom ISDN-S0-Bus ableitet. Die Slave-Teilnehmer oder Slave-Basen, welche vorhandene lokale Oszillatoren besitzen, können nun auf den Takt des Masters abgestimmt bzw. nachgezogen werden.

Über den vorhandenen Master ist eine Vermittlungssignalisierung und/oder eine Steuerung des Hand-over zwischen den Teilnehmern des derart gebildeten zellularen Kleinsystems möglich.

Vorzugsweise wird beim Zeitgetrenntlageverfahren auf ein 4-Bit-ADPCM-Format zurückgegriffen.

Vorrichtungsseitig wird der aus dem Senderleitungs- und Empfangsleitungspaar bzw. dem entsprechenden Adernpaar des S0-Bus gebildete Phantomkreis durch Einfügen von Drosseln modifiziert, indem eine Erhöhung der Impedanz des Phantomkreises vorgenommen wird, so daß dieser für die Kommunikation zwischen den lokal gespeisten Teilnehmern genutzt werden kann. Die Impedanz des Phantomkreises kann durch Zwischenschalten von Drosseln zwischen Anschlußstelle und S0-Bus geändert werden. Durch diese einfache Impedanzveränderungsmaßnahme werden übrige Standardparameter des Bus nicht beeinflußt und die Reichweite wird erhöht. Der Phantomkreis bildet demnach einen Kommunikationskanal zwischen den einzelnen Teilnehmern zum Übertragen von Daten und/oder Audiosignalen, ohne daß eine Änderung der Verkabelung oder der Businstallation notwendig wird.

Im einzelnen ist zur Impedanzerhöhung im Phantomkreis das Anordnen von Drosseln vorgesehen, wobei die Drosseln zwischen der zentralen Einspeisestelle (NTBA) für den passiven oder aktiven Bus, welcher einen Senderahmen vorgibt, und der Busverkabelung, einen ersten Impedanzadapter bildend, angeordnet werden. Die Busverkabelung wird hinter dem letzten Teilnehmeranschluß durch einen weiteren, zweiten Impedanzadapter abgeschlossen.

Bei einer weiteren Ausführungsform weist die zentrale Einspeisestelle (NTBA), die dem Abschluß der öffentlichen 2-Draht-Leitung und der Umsetzung in die 4-Draht-Busleitung dient, ein Senderleitungspaar und ein Empfangsleitungspaar auf, in dem Drosseln angeordnet sind, welche durch je einen Abschlußwiderstand überbrückt werden. Die Drosseln eines Leitungspaares können dabei gleichzeitig je eine Zweitach-EMV-Drossel bilden, so daß Störungen vom und durch den Bus ferngehalten werden.

Mit den vorgeschlagenen Maßnahmen, nämlich der Bildung eines Kommunikationskanals zwischen den Basen über den S0-Bus-Phantomkreis entsteht eine interne Übertragungsmöglichkeit für Sprache und/oder Daten, ohne daß die sogenannten B-Kanäle blockiert werden. Vorzugsweise wird also auf den normalerweise für die Versorgung busgespeister Teilnehmer vorhandenen Kreis zurückgegriffen, wobei der wechselspannungsmäßige Kurzschluß durch die Speiseschaltung im NTBA des Phantomkreises aufgehoben wird. Hierfür wird auf den Impedanzadapter zurückgegriffen, wobei die Phantomkreisimpedanz mit ihrem Wellenwiderstand abgeschlossen wird und auf diese Weise für die interne Kommunikation nutzbar ist.

Der Impedanzadapter kann zwischen der NTBA und der S0-Busverkabelung, beispielsweise durch Steckverbinder eingefügt werden, wobei ein weiterer Adapter am S0-Busende den zweiten Abschluß bildet. Dieser zweite Abschluß kann wie ein Teilnehmer an die letzte Dose, z.B. TAE-Dose des Bussystems angeschlossen werden.

Die erfindungsgemäßen Impedanzadapter aus Drosseln und Abschlußwiderständen sind rein passiv aufgebaut und können ohne hohe Kosten nachträglich installiert werden. Für die Betriebskreise wirkt der Adapter lediglich wie ein Teil der Leitung mit der Folge einer vollen Kompatibilität mit dem üblichen Euro-ISDN (Integrated Services Digital Network)-Standard.

Durch die gegebene Synchronisation, insbesondere eine DECT-Multiframesynchronisation ist eine nahtlose Gesprächsübergabe intern und extern möglich, so daß im Netz Hand-off-Intelligenz vorhanden ist und ein MOHO (Mobile Operated Hand Off) entfallen kann.

Die Teilnehmerendgeräte, z.B. DECT-Standardbasisstationen, weisen neben ISDN-Übertragern einen weiteren Übertrager zum Anschluß und für den Datentransfer über den Phantomkreis sowie einen Phantomkreiscontroller zur Steuerung des Laufzeitausgleichs auf. Die Aufgaben des Phantomkreiscontrollers können durch einen entsprechend weitergebildeten bzw. ergänzten S0-Controller übernommen werden.

Busgespeiste Teilnehmer werden über einen weiteren Impedanzadapter mit dem Phantomkreis verbunden, um eine unerwünschte Dämpfung des entsprechenden Kreises zu verhindern.

Erfindungsgemäß weist der eingesetzte Impedanzadapter je Leitungspaar eine Seriendrossel auf, wobei die Seriendrosseln jedes Leitungspaares ausgangsseitig durch eine weitere Drossel überbrückt sind. Die Überbrückungsdrosseln besitzen je eine Anzapfung, wobei zwischen den Anzapfungen eine Reihenschaltung aus einem Widerstand und einer Kapazität angeordnet ist.

Es hat sich gezeigt, daß durch die aktive Nutzung des Phantomkreises die Charakteristik des Sender- und Empfangsadernpaares bzw. der entsprechenden Leitungen nicht nachteilig beeinflußt wird. Da die Laufzeiten im Betriebs- und im Phantomkreis sich nur geringfügig unterscheiden, ist es möglich, durch Messungen der Signallaufzeit des Phantomkreises auf das Verhalten des Betriebskreises zu schließen.

Durch den möglichen Zugriff auf den Phantomkreis kann der entsprechende Controller der jeweiligen DECT-Basisstation bzw. des Teilnehmers die Laufzeit des S0-Busses bzw. der hierüber transferierten Signale oder Signalpakete ermitteln. Der Sendezeitpunkt des entsprechenden Teilnehmers wird dann so nachgeregelt, daß auch bei einem langen Kabel am Eingang der zentralen Einspeisestelle (NTBA) kein Versatz auftritt, wodurch wiederum die Reichweite und damit die Länge des S0-Busses wesentlich erhöht werden kann.

Insgesamt wird es mittels des vorgeschlagenen Verfahrens und der zur Realisierung des Verfahrens beschriebenen Vorrichtung möglich, einen Kommunikationskanal zwischen verschiedenen Teilnehmern eines S0-Bussystems zu schaffen, über welchen ein interner Informationsaustausch möglich wird, ohne daß übrige Standardparameter des Busses nachteilig beeinflußt werden. Bereits vorhandene Installationen lassen sich nachträglich mit geringen Kosten anpassen oder erweitern. Erfindungsgemäß wird ein nahtloses Hand-off mit am Bus befindlichen DECT-Systemen möglich, da Synchronität der Basisstationen auch dann gegeben ist, wenn ein Gespräch eines Mobilteils zwischen Funkbereichen der Basisteile wechselt.

Die Erfindung soll nachstehend anhand eines Ausführungsbeispiels sowie unter Zuhilfenahme von Figuren näher erläutert werden.

Hierbei zeigen:

Fig. 1    ein Blockschaltbild der Impedanzadapteranordnung;

Fig. 2    den Aufbau eines Impedanzadapters;

Fig. 3    einen modifizierten NTBA mit Adapterfunktion;

Fig. 4    ein Blockschaltbild zur Erläuterung der Phantomkreiskommunikation; und

Fig. 5    einen Rahmenaufbau für die Phantomkreiskommunikation.

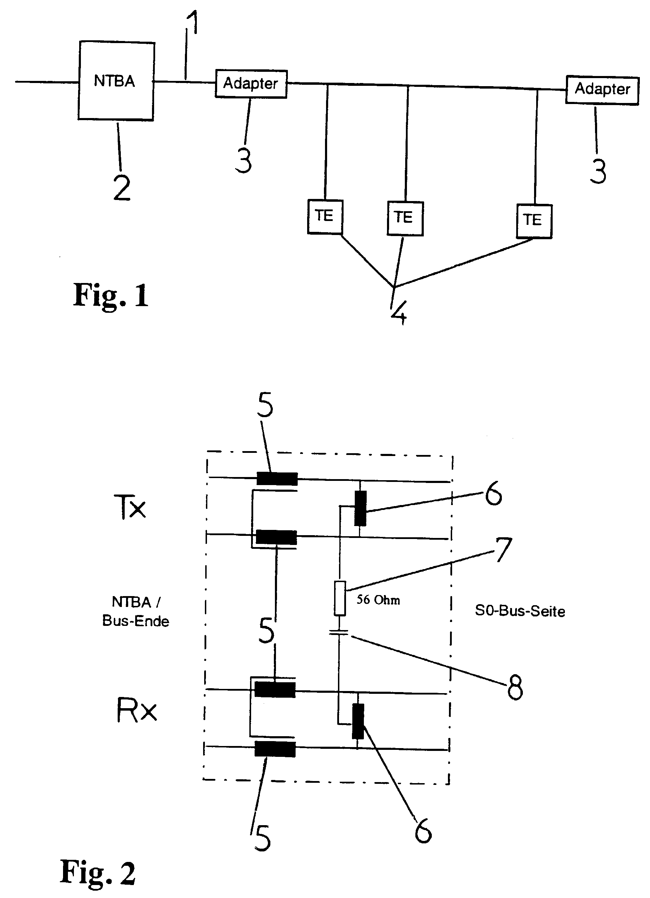

Das in der Fig. 1 gezeigte Blockschaltbild geht von einem S0-Bus 1 aus, welcher ausgangsseitig einer zentralen Einspeisestelle (NTBA) 2 beispielsweise über mehrere Gebäude verlegt ist.

Ein Impedanzadapter 3 ist zwischen NTBA 2 und S0-Busverkabelung, welche ein Senderleitungs- und ein Empfangsleitungspaar beinhaltet, angeordnet. Der S0-Bus 1 ist endseitig durch einen weiteren Impedanzadapter 3 abgeschlossen. Verschiedene Teilnehmer 4 stehen mit dem Bus in Verbindung und können über diesen kommunizieren.

Eine derartige Kommunikation wird mit einem Kommunikationskanal erreicht, welcher zwischen den einzelnen Teilnehmern 4 über den S0-Bus-Phantomkreis realisiert ist.

Die in der NTBA 2 vorhandene Speiseschaltung schließt üblicherweise durch ihren geringen Innenwiderstand den Phantomkreis wechselspannungsmäßig kurz. Durch die Impedanzadapter 3 wird der interne Kurzschluß beseitigt, so daß der Phantomkreis bzw. die Phantomkreisimpedanz mit einem entsprechenden Wellenwiderstand abgeschlossen ist und für die interne Kommunikation genutzt werden kann.

Der ausgangsseitig der NTBA 2 vorhandene Impedanzadapter 3 wird z.B. durch Steckverbinder in die S0-Busverkabelung eingefügt. Der Abschlußimpedanzadapter 3 an Ende des S0-Busses 1 bildet den entsprechenden zweiten Abschluß, welcher wie ein weiterer Teilnehmer an eine letzte Anschlußdose angesteckt werden kann.

Wie die Fig. 2 zeigt, wird der aus dem Senderleitungspaar und dem Empfangsleitungspaar des S0-Busses gebildete Phantomkreis durch das Einfügen von Drosseln modifiziert. Diese Drosseln führen zu einer Impedanzerhöhung des Kreises, so daß dieser für eine Kommunikation zwischen den lokal gespeisten Teilnehmern genutzt werden kann.

Wie in der Fig. 1 gezeigt, kann die Impedanz des Phantomkreises durch Zwischenschalten der Drosseln in die Verbindung zwischen der NTBA und dem S0-Bus oder aber auch durch Aufteilen der in einer NTBA vorhandenen Vierfachdrossel auf zwei Zweifachdrosseln erreicht werden.

Durch die Änderung der Drosseln der Speiseschaltung im NTBA oder durch Einfügen eines Drosselsatzes gemäß Fig. 2 in den S0-Bus wird der Phantomspeisekreis für eine interne, relativ breitbandige Überwachung nutzbar gemacht, wobei busgespeiste Teilnehmer über ein Zwischenschaltglied angepaßt über den Bus betrieben werden können. Gemäß Fig. 2 besitzt der Impedanzadapter je Senderleitungspaar TX bzw. je Empfangsleitungspaar RX Seriendrosseln 5, wobei die Seriendrosseln 5 jedes Leitungspaares TX und RX ausgangsseitig durch eine weitere Drossel 6 überbrückt sind.

Die Überbrückungsdrossel 6 besitzt je eine Anzapfung, wobei zwischen den Anzapfungen eine Reihenschaltung aus einem Widerstand 7 und einer Kapazität 8 angeordnet ist. Diese Reihenschaltung mit einer Kapazität deren Wert groß gegen den Widerstandswert ist, stellt den Abschlußwiderstand des Phantomkreises dar.

Der Impedanzadapter gemäß Fig. 2 mit Serien- und Überbrückungsdrossel wird in die NTBA und S0-Busverkabelung eingeschleift, wobei ein weiterer Adapter am Busende den entsprechenden Abschluß bildet, um stehende Wellen auszuschalten.

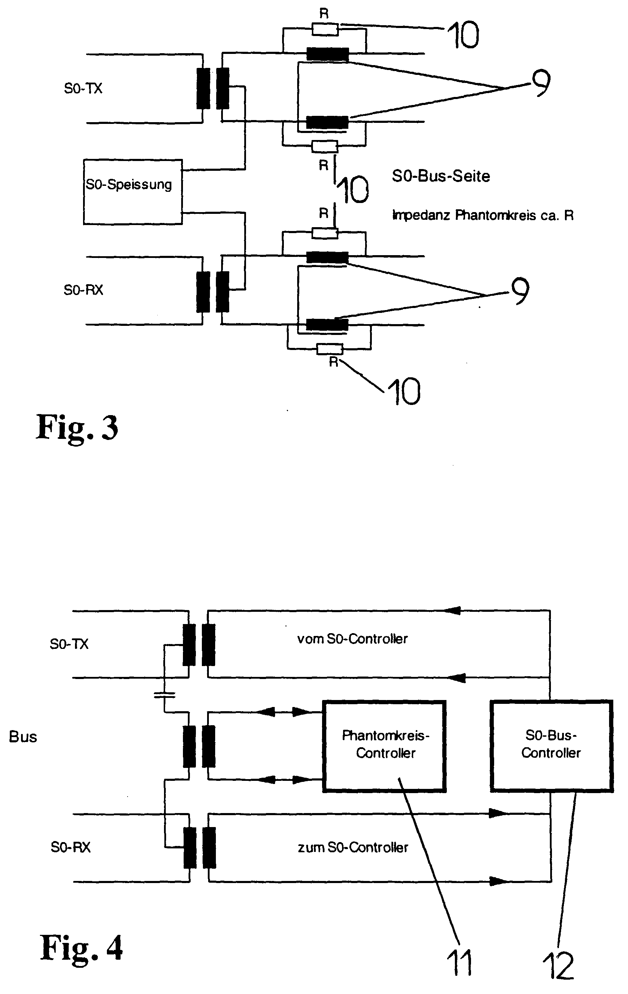

Gemäß der Fig. 3 besteht die Möglichkeit, einen an sich bekannten NTBA so zu modifizieren, daß dieser eine Impedanzfunktion erfüllt. Hierfür werden zwei Zweifach-EMV-Drosseln 9 verwendet, wobei jede Drossel mit einem Widerstand 10 überbrückt ist. Die Zweifach-EMV-Drosseln 9 sind jeweils auf einen gemeinsamen Kern gewickelt und dienen gleichzeitig der Störstrahlungsunterdrückung, d.h. dem Erhalt der gewünschten elektromagnetischen Verträglichkeit der Gesamtanordnung.

Es sei an dieser Stelle angemerkt, daß die Teilnehmer 4 nach Fig. 1 beispielsweise in Form von DECT-Basisstationen zusätzlich zu den Standard-ISDN-Übertragern einen weiteren Übertrager aufweisen, der einen entsprechenden Datentransfer oder Datenaustausch über bzw. mit dem Phantomkreis ermöglicht.

Die Phantomkreiskommunikation wird nun, wie mit dem Blockschaltbild nach Fig. 4 gezeigt, abgewickelt.

Ohne die erfindungsgemäßen Maßnahmen tritt aufgrund des entfernungsabhängigen Laufzeitunterschieds der von den einzelnen Teilnehmern gesendeten Bits am Eingang des NTBA ein Rahmenversatz auf, da die einzelnen Teilnehmer als gemeinsamen Bezug nur den Senderahmen des NTBA nutzen können.

Durch Zugriff auf den Phantomkreis kann mit Hilfe eines Phantomkreiscontrollers 11, welcher Bestandteil der DECT-Basisstation ist, die Laufzeit des S0-Busses ermittelt werden. Der Sendezeitpunkt des jeweiligen Teilnehmers kann dann so nachgeregelt werden, daß auch bei langem Kabel bis zu einer Länge von ca. 1000 m am Eingang des NTBA ein Versatz nicht auftritt. Hierdurch kann die Länge und damit die Reichweite des S0-Busses wesentlich erhöht werden.

In einer bevorzugten Ausführungsform kann eine Integration von Phantomcontroller 11 und S0-Buscontroller 12 vorgenommen werden, um die Kosten zu reduzieren.

Es hat sich gezeigt, daß die Charakteristik der Sende- und Empfangsleitungspaare durch die zusätzlichen Induktivitäten nicht wesentlich beeinflußt wird. Die Laufzeiten im Betriebs- und Phantomkreis unterscheiden sich nur geringfügig, wodurch es möglich ist, durch Messung der Signallaufzeit des Phantomkreises auf das Verhalten des Betriebskreises zu schließen.

Die Datenübertragung auf dem Phantomkreis erfolgt mit dem an sich bekannten Zeitgetrenntlageverfahren. Die Koordinierung der Zugriffe auf den Phantomkreis wird durch einen Master vorgenommen, wobei sich der Datenstrom in folgende vier Blöcke aufteilt:

- Daten-, Takt- und Rahmenbit des Masters
- Datenbit der Slaves (Teilnehmer)
- B-Kanalbits Internteilnehmer A
- B-Kanalbits Internteilnehmer B

Beim Zeitgetrenntlageverfahren tritt eine Kabellaufzeit $t_D$ im Bereich von ca. 10 µs/km bei vier Datenblöcken vierfach auf. Weiterhin ist nach jedem Block das Einlegen einer Schutzzeit $t_G$ von ca. 5 µs notwendig. Der Übertragerkopplung wird durch AMI-Codierung Rechnung getragen, welche am Ende jedes Blocks ein DT-Ausgleichsbit ($t_L$) erfordert. Um die Rahmenbits $t_F$ effizienter außen zu nutzen, wird die Rahmenlänge auf $t_R$ = 250 µs festgelegt. Damit erhält man:

$$4{*}t_D + 4{*}t_L + 4{*}t_G + t_F + n{*}t_B + m{*}t_B = t_R$$

Die Anzahl m der Signalisierungsbits beträgt drei pro Rahmen, was einer Datenrate von 8 kBit/s des Masters sowie 4 kBit/s der Slaves entspricht. In jedem Rahmen werden m B-Kanalbits übertragen. Aufgrund der obigen Angaben ist eine Übertragung im PCM-8-Format mit m=32 aufgrund der niedrigen Bitdauer bei der gegebenen Leitungslänge nicht praktikabel. Vorzugsweise kommt daher ein 4-Bit-ADPCM (m=16)-Format in Betracht. Die Bitdauer beträgt hier $t_B$=7,92 µs. Zweckmäßig wird die Bitdauer auf zwei Drittel der S0-Bitdauer von 5,208 µs, also auf $t_B$=7,8125 µs festgelegt, was einer Schwerpunktsfrequenz des AMT-codierten Signals von 64 kHz entspricht.

Die Synchronisierung der DECT-Basisstationen sowohl des Taktes als auch des DECT-Multiframe erfolgt durch das F-Bit und die D-Bits des Masters, welcher seinen Takt seinerseits vom S0-Bus ableitet. Mit dieser Taktinformation können die Slave-Basisstationen ihre lokalen Oszillatoren auf den Takt des Masters nachziehen.

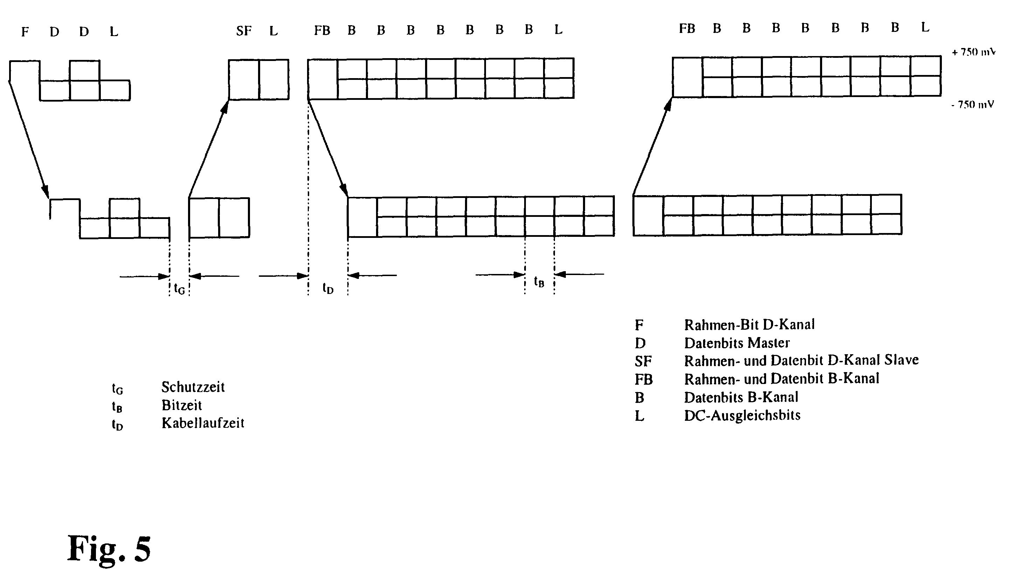

Über den Master kann auch eine Signalisierung mit der Vermittlungsstelle zentral abgewickelt werden und es besteht die Möglichkeit, das Inter-Cell-Hand-over zu steuern. Bezüglich des Rahmenaufbaus, wie oben beschrieben, sei auf die Fig. 5 verwiesen.

Die gewählte Rahmengröße erleichtert die Übertragung von byte-orientierten Daten im B-Kanal, welches beispielsweise für eine Konfiguration der Basisstationen über PC oder CTI (Computer Telephone Integration)-Anwendungen von Vorteil ist. Bei einer gegebenen Auslegung der Signallaufzeit von im wesentlichen 10 µs besteht weiterhin die Möglichkeit, zwei S0-Busse im Punkt-zu-Mehrpunkt-Verfahren sinnvoll zu verbinden, um die mit dem DECT-Kleinsystem abgedeckte Zelle nochmals zu vergrößern.

Mit dem vorstehend beschriebenen Ausführungsbeispiel wurde eine zweckmäßige Möglichkeit für eine interne Kommunikation über einen S0-Bus geschaffen, wobei gleichzeitig eine nahtlose Gesprächsweitergabe zwischen am Bus angeschlossenen DECT-Basisstationen über den kostenfreien, internen Kommunikationskanal gegeben ist. Durch die erfindungsgemäß gegebene Reichweite beim Punkt-zu-Punkt-Betrieb im Bereich von bis zu 1000 m ist ein derartiges zellulares Kleinsystem für gewerbliche Zwecke, aber auch im privaten Bereich erfolgreich anwendbar, wobei eine Zusatzverkabelung nicht notwendig wird. Durch die Gestaltung des üblicherweise über die Versorgung busgespeister Teilnehmer vorhandenen Phantomkreises als Kommunikationskanal kann unter Beachtung eines Ausgleichs von Kabellaufzeiten bzw. einer entsprechenden Steuerung des Sendezeitpunkts der Teilnehmer ein sicherer Zugriff auf den Phantomkreis erfolgen, ohne daß die Synchronisation einzelner Teilnehmer verloren geht.

**Patentansprüche**

1. Verfahren zur Kommunikation zwischen mehreren, an einem externen ISDN-S0-Bus lokal angeschlossenen Teilnehmern mit einem durch ein Senderleitungspaar und Empfangsleitungspaar des ISDN-S0-Bus gebildeten Phantomkreis,
   **dadurch gekennzeichnet**,
   daß ein interner Kommunikationskanal zwischen den angeschlossenen Teilnehmern unter Rückgriff auf den durch Impedanzanpassung kurzschlußfrei gehaltenen Phantomkreis gebildet wird, und entfernungsabhängige Laufzeitunterschiede der von den einzelnen Teilnehmern über den Bus gesendeten Signale zur zentralen Einspeisestelle (NTBA) durch Zugriff auf den Phantomkreis bestimmt und mittels der teilnehmerseitig jeweils vorhandenen Controller die Sendezeitpunkte nachgeregelt werden, so daß am Eingang der zentralen Einspeisestelle (NTBA) ein Rahmenversatz vermeidbar ist und die übertragenen Signale im Synchronraster liegen.

2.  Verfahren nach Anspruch 1,
    **dadurch gekennzeichnet,**
    daß die im Phantomkreis übertragenen Kommunikationssignale oder -bits auf der Basis der bestimmten Laufzeitunterschiede zugeordnet werden.

3.  Verfahren nach Anspruch 1,
    **dadurch gekennzeichnet**,
    daß die Daten- und Signalübertragung über den Phantomkreis auf der Basis eines an sich bekannten Zeitgetrenntlageverfahrens erfolgt, wobei die Zugriffskoordinierung auf den Phantomkreis durch einen Master vorgenommen wird sowie die Synchronisation der angeschlossenen Slave-Teilnehmer oder Slave-Basen, des Taktes und der Rahmen durch vorgegebene Bits des Masters erfolgt, welcher seinen Takt vom ISDN-S0-Bus ableitet, so daß die Slave-Teilnehmer oder Slave-Basen vorhandene lokale Oszillatoren auf den Takt des Masters abstimmen und nachziehen können.

4.  Verfahren nach Anspruch 3,
    **dadurch gekennzeichnet**,
    daß über den Master eine Vermittlungssignalisierung und/oder eine Steuerung des Hand-over zwischen den Teilnehmern des gebildeten zellularen Kleinsystems erfolgt.

5.  Verfahren nach Anspruch 3,
    **dadurch gekennzeichnet,**
    daß beim Zeitgetrenntlageverfahren insbesondere auf 4-Bit-ADPCM-Formate zurückgegriffen wird.

6.  Verfahren nach einem der vorangegangenen Ansprüche,
    **dadurch gekennzeichnet,**
    daß die am Bus angeschlossenen Teilnehmer nach dem DECT-Standard arbeitende Basisstationen sind, welche mit Mobilteilen zusammenwirken.

7.  Vorrichtung zur Kommunikation zwischen mehreren, an einem externen ISDN-S0-Bus lokal angeschlossenen Teilnehmern mit einem durch ein Senderleitungspaar und Empfangsleitungspaar des ISDN-S0-Bus gebildeten Phantomkreis,
    **dadurch gekennzeichnet**,
    daß zur Impedanzerhöhung im Phantomkreis Drosseln vorgesehen sind, wobei die Drosseln zwischen einer zentralen Einspeisestelle (NTBA) für den passiven oder erweiterten passiven Bus, welcher einen Senderahmen vorgibt, und der Busverkabelung, einen ersten Impedanzadapter bildend, angeordnet werden, wobei die Busverkabelung hinter dem letzten Teilnehmeranschluß durch einen zweiten Impedanzadapter abgeschlossen ist.

8.  Vorrichtung zur Kommunikation zwischen mehreren, an einem externen ISDN-S0-Bus lokal angeschlossenen Teilnehmern mit einem durch ein Senderleitungspaar und Empfangsleitungspaar des ISDN-S0-Bus gebildeten Phantomkreis,
    **dadurch gekennzeichnet,**
    daß die zentrale Einspeisestelle (NTBA) im Senderleitungspaar und im Empfangsleitungspaar angeordnete Drosseln aufweist, welche durch je einen Abschlußwiderstand überbrückt sind, wobei die Drosseln eines Leitungspaars gleichzeitig je eine Zweifach-EMV-Drossel bilden.

9.  Vorrichtung nach Anspruch 7 oder 8,
    **dadurch gekennzeichnet,**
    daß die Teilnehmergeräte neben Standard-ISDN-Übertragern je einen weiteren Übertrager zum Anschluß und für den Datentransfer über den Phantomkreis sowie einen Phantomkreiscontroller zur Steuerung des Laufzeitausgleichs aufweisen.

10. Vorrichtung nach einem der Ansprüche 7 bis 9,
    **dadurch gekennzeichnet,**
    daß busgespeiste Teilnehmer über einen weiteren Impedanzadapter mit dem Phantomkreis verbunden sind.

11. Vorrichtung nach Anspruch 7, 9 oder 10,
    **dadurch gekennzeichnet,**
    daß der Impedanzadapter je Leitungspaar eine Seriendrossel (5) aufweist, wobei die Seriendrosseln (5) jedes Leitungspaares ausgangsseitig durch eine weitere Drossel (6) überbrückt sind und die Überbrückungsdrosseln (6) je eine Anzapfung aufweisen, wobei zwischen den Anzapfungen eine Reihenschaltung aus einem Widerstand (7) und einer Kapazität (8) angeordnet ist.

12. Vorrichtung nach einem der Ansprüche 7 bis 11,
    **dadurch gekennzeichnet,**
    daß die Teilnehmer DECT-Standard-Basisstationen und Mobilteile umfassen, wobei über den Phantomkreis ein interner Kommunikationssprechweg gebildet ist und die am Bus angeschlossenen DECT-Standard-Basisstationen ein zellulares DECT-Kleinsystem bilden.

**Fig. 1**

Tx

NTBA /
Bus-Ende

Rx

56 Ohm

S0-Bus-Seite

**Fig. 2**

R

10

9

SO-TX

SO-Speissung

R

10

SO-Bus-Seite

Impedanz Phantomkreis ca. R

R

9

SO-RX

R

10

## Fig. 3

SO-TX

vom SO-Controller

Bus

Phantomkreis-Controller

SO-Bus-Controller

SO-RX

zum SO-Controller

11

12

## Fig. 4

EP 0 979 021 A2

F    D    D    L                    SF   L    FB   B    B    B    B    B    B    B    L                    FB   B    B    B    B    B    B    B    L

+ 750 mV

- 750 mV

$t_G$    $t_D$    $t_B$

| | |
|---|---|
| $t_G$ | Schutzzeit |
| $t_B$ | Bitzeit |
| $t_D$ | Kabellaufzeit |

| | |
|---|---|
| F | Rahmen-Bit D-Kanal |
| D | Datenbits Master |
| SF | Rahmen- und Datenbit D-Kanal Slave |
| FB | Rahmen- und Datenbit B-Kanal |
| B | Datenbits B-Kanal |
| L | DC-Ausgleichsbits |

# Fig. 5